(19) Europäisches Patentamt
European Patent Office
Office européen des brevets

(11) **EP 3 181 433 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(51) Int Cl.:
*B62D 15/02* (2006.01)    *B62D 1/16* (2006.01)
*B62D 6/00* (2006.01)    *G01C 21/36* (2006.01)

(21) Anmeldenummer: **16204738.5**

(22) Anmeldetag: **16.12.2016**

(54) **VERFAHREN UND VORRICHTUNG ZUM ANPASSEN EINES LENKRADWINKELS EINES LENKRADES UND EINES RADLENKWINKELS EINER RADLENKUNG IN EINEM KRAFTFAHRZEUG NACH EINEM DURCHGEFÜHRTEN AUTOMATISIERTEN FAHRMANÖVER**

METHOD AND DEVICE FOR ADJUSTING A STEERING WHEEL ANGLE OF A STEERING WHEEL AND A WHEEL GUIDANCE ANGLE OF A WHEEL STEERING IN A MOTOR VEHICLE AFTER AN AUTOMATED DRIVING MANEUVER

PROCÉDÉ ET DISPOSITIF D'ADAPTATION D'UN ANGLE DE VOLANT DE DIRECTION ET D'UN ANGLE DE DIRECTION DE ROUE DANS UN VÉHICULE AUTOMOBILE SELON UNE MANOEUVRE AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2015 DE 102015225888**

(43) Veröffentlichungstag der Anmeldung:
**21.06.2017 Patentblatt 2017/25**

(73) Patentinhaber: **VOLKSWAGEN AKTIENGESELLSCHAFT**
**38440 Wolfsburg (DE)**

(72) Erfinder:
• **Düring, Michael**
  **38106 Braunschweig (DE)**
• **Franke, Dr. Kai**
  **39576 Stendal (DE)**
• **Töpfer, Daniel**
  **38104 Braunschweig (DE)**

(56) Entgegenhaltungen:
EP-A2- 2 862 767    DE-A1-102007 002 266
DE-A1-102012 004 502

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Vorrichtung zum Anpassen eines Lenkradwinkels eines Lenkrades und eines Radlenkwinkels einer Radlenkung in einem Kraftfahrzeug nach einem durchgeführten automatisierten Fahrmanöver.

Moderne Kraftfahrzeuge weisen eine Vielzahl von Assistenzsystemen auf, welche den Fahrer beim Führen des Fahrzeugs unterstützen. Vermehrt kommen dabei teilautomatische und vollautomatische Systeme zum Einsatz, die eine semi- oder vollautomatische Steuerung des Kraftfahrzeugs erlauben.

Es ist bekannt, Kraftfahrzeuge mit Hilfe eines Assistenzsystems automatisiert auf Trajektorien fahren zulassen. Ferner ist es bekannt, Sicherheitsfunktionen automatisiert durch ein Assistenzsystem durchführen zu lassen. Eine solche Sicherheitsfunktion kann beispielsweise auf das Einhalten einer Fahrspur oder auf das Abbremsen oder Ausweichen zur Vermeidung einer Kollision gerichtet sein. Das Assistenzsystem erkennt automatisch eine Gefahrensituation und reagiert entsprechend, indem es die Steuerung des Kraftfahrzeugs teilweise oder vollständig übernimmt.

Beim Durchführen eines solchen automatisierten Fahrmanövers kann es bei modernen Lenksystemen vorkommen, dass ein Lenkrad abgekoppelt wird von einer Radlenkung, so dass nach dem Beenden des automatisierten Fahrmanövers eine Differenz zwischen dem Lenkradwinkel und dem Radlenkwinkel vorliegt und ein Wiederankoppeln des Lenkradwinkels an den Radlenkwinkel bzw. eine Rückübergabe der Kontrolle an den Fahrer oder eine andere automatisierte Fahrzeugsteuerung erfolgen muss.

Aus der EP 2 862 767 A2 ist ein Kraftfahrzeug bekannt, umfassend wenigstens ein Fahrerassistenzsystem, wobei das Kraftfahrzeug in einem ersten Betriebsmodus des Fahrerassistenzsystems durch einen Fahrer steuerbar ist, wobei das Fahrerassistenzsystem ausgebildet ist, bei einem durch Auswertung von das Kraftfahrzeug betreffenden Egodaten und/oder das Kraftfahrzeugumfeld betreffenden Umfelddaten mit einer Wahrscheinlichkeit, die eine vorgegebene Mindestwahrscheinlichkeit übersteigt, ermittelten zukünftigen und/oder einem erfolgten Verlassen der Fahrbahn temporär in einen zweiten Betriebsmodus umzuschalten, in dem die Lenkung des Kraftfahrzeugs ohne Eingriffsmöglichkeit durch den Fahrer automatisch durch das Fahrerassistenzsystem erfolgt.

Aus der DE 10 2012 004 502 A1 ist ein Verfahren zum automatisierten Einparken eines mit einem aktiven Parklenkassistenzsystem und einer Überlagerungslenkvorrichtung ausgestatteten Kraftfahrzeugs bekannt. Das Verfahren umfasst die Schritte: Ermittlung eines aktuellen Radwinkels oder eines aktuellen Lenkradwinkels des Kraftfahrzeugs, Erzeugung einer dynamischen Winkelvorgabe durch das Parklenkassistenzsystem und Übergabe der dynamischen Winkelvorgabe als Eingangssignal für eine Steuervorrichtung der Fahrzeuglenkvorrichtung und für eine Steuervorrichtung der Überlagerungslenkungsvorrichtung, Steuern der Fahrzeuglenkvorrichtung derart, dass der Radwinkel entsprechend der dynamischen Winkelvorgabe geändert wird, und Steuern der Überlagerungslenkvorrichtung derart, dass ein Überlagerungswinkel erzeugt wird, durch den die durch die Steuerung der Fahrzeuglenkvorrichtung eigentlich bewirkte Änderung des Lenkradwinkels zumindest teilweise kompensiert wird. Das Dokument DE 10 2007 002266 A1 ist als nächstliegender Stand der Technik nach dem Oberbegriff der Ansprüche 1 und 8 zu sehen.

Der Erfindung liegt somit das Problem zu Grunde, ein Verfahren und eine Vorrichtung zum Wiederankoppeln eines Lenkradwinkels an einen Radlenkwinkel zu schaffen, bei denen das Wiederankoppeln verbessert ist.

Die technische Aufgabe wird erfindungsgemäß durch ein Verfahren mit den Merkmalen des Patentanspruchs 1 und einer Vorrichtung mit den Merkmalen des Patentanspruchs 8 gelöst.

Vorteilhafte Ausgestaltungen der Erfindung ergeben sich aus den Unteransprüchen. Insbesondere wird ein Verfahren zum Anpassen eines Ist-Lenkradwinkels eines Lenkrades und eines Ist-Radlenkwinkels einer Radlenkung in einem Kraftfahrzeug nach einem durchgeführten automatisierten Fahrmanöver zur Verfügung gestellt, umfassend die folgenden Schritte: Erfassen des Ist-Lenkradwinkels durch eine Lenkradwinkelerfassungseinrichtung und des Ist-Radlenkwinkels durch eine Radlenkwinkelerfassungseinrichtung, Anpassen des Ist-Lenkradwinkels durch eine Lenkradstelleinrichtung und/oder des Ist-Radlenkwinkels durch eine Radlenkungsstelleinrichtung innerhalb einer vorgegebenen Übergabezeit auf Grundlage einer Übergabestrategie.

Ferner wird eine Vorrichtung in einem Kraftfahrzeug zum Anpassen eines Ist-Lenkradwinkels eines Lenkrades und eines Ist-Radlenkwinkels einer Radlenkung nach einem durchgeführten automatisierten Fahrmanöver geschaffen, umfassend eine Lenkradwinkelerfassungseinrichtung zum Erfassen des Ist-Lenkradwinkels, eine Radlenkwinkelerfassungseinrichtung zum Erfassen des Ist-Radlenkwinkels, eine Lenkradstelleinrichtung zum Einstellen des Ist-Lenkradwinkels, eine Radlenkungsstelleinrichtung zum Einstellen des Ist-Radlenkwinkels, eine Steuerung, wobei die Steuerung derart ausgebildet ist, auf Grundlage einer Übergabestrategie ein Anpassen des Ist-Lenkradwinkels durch die Lenkradstelleinrichtung und/oder des Ist-Radlenkwinkels durch die Radlenkungsstelleinrichtung zu veranlassen.

Die Kernidee der Erfindung ist, nach Durchführen einer automatisierten Fahrt, beispielsweise einem zur Erhaltung der Sicherheit des Kraftfahrzeugs durchgeführten Ausweichmanöver, ein Wiederankoppeln eines Ist-Lenkradwinkels an einen Ist-Radlenkwinkel durch Anpassen des Ist-Lenkradwinkels und/oder des Ist-Radlenkwinkels zu erreichen. Dafür wird eine Übergabestrategie definiert, welche ein komplettes Anpassen beschreibt und auf Grundlage derer das Anpassen von Beginn bis zum erfolgreichen Abschluss geregelt wird. Der Vorteil ist, dass situationsabhängig unterschiedliche Übergabestrategien ausgewählt werden können. Durch das erfindungsgemäße Verfahren und die Vorrichtung kann somit flexibel auf eine jeweils vorliegende Situation reagiert werden.

In einer Ausführungsform ist vorgesehen, dass die Übergabestrategie folgende Schritte umfasst: Berechnen eines Soll-Lenkradwinkels als Funktion des Ist-Radlenkwinkels durch eine Steuerung, Ausüben eines Drehmomentes auf das Lenkrad als Funktion des Soll-Lenkradwinkels, des Ist-Lenkradwinkels und der vorgegebenen Übergabezeit durch die Lenkradstelleinrichtung, solange bis der Ist-Lenkradwinkel dem Soll-Lenkradwinkel entspricht. Durch Ausüben des Drehmomentes auf das Lenkrad wird das Lenkrad wieder in eine Stellung gebracht, in der der Lenkradwinkel mit dem Radlenkwinkel übereinstimmt. Übereinstimmen heißt dabei, dass der Lenkradwinkel auf einen solchen Wert gebracht wird, den er angenommen hätte, wenn das Lenkrad und die Radlenkung während des automatisierten Fahrmanövers nicht entkoppelt gewesen wären. Das auf das Lenkrad ausgeübte Drehmoment kann dabei beispielsweise proportional einem Differenzwert zwischen dem Soll-Lenkradwinkel und dem Ist-Lenkradwinkel sein. Prinzipiell sind aber auch andere Regelungsverfahren möglich, beispielsweise unter Berücksichtigung integraler und/oder differentieller Anteile (z.B. als PID-Regler).

In einer weiteren Ausführungsform ist vorgesehen, dass die Übergabestrategie folgende Schritte umfasst: Berechnen eines Soll-Radlenkwinkels als Funktion des Ist-Lenkradwinkels durch eine Steuerung, Ausüben eines Drehmomentes auf die Radlenkung als Funktion des Soll-Radlenkwinkels, des Ist-Radlenkwinkels und der vorgegebenen Übergabezeit durch die Radlenkungsstelleinrichtung, solange bis der Ist-Radlenkwinkel dem Soll-Radlenkwinkel entspricht. Durch Ausüben des Drehmomentes auf die Radlenkung werden die Räder wieder in eine Stellung gebracht, in der der Lenkradwinkel mit dem Radlenkwinkel übereinstimmt. Übereinstimmen heißt dabei, dass der Radlenkwinkel auf einen solchen Wert gebracht wird, den er angenommen hätte, wenn das Lenkrad und die Radlenkung während des automatisierten Fahrmanövers nicht entkoppelt gewesen wären. Das auf die Räder ausgeübte Drehmoment kann dabei beispielsweise proportional einem Differenzwert zwischen dem Soll-Radlenkwinkel und dem Ist-Radlenkwinkel sein. Prinzipiell sind aber auch andere Regelungsverfahren möglich, beispielsweise unter Berücksichtigung integraler und/oder differentieller Anteile (z.B. PID-Regler).

In einer weiteren Ausführungsform ist vorgesehen, dass die Übergabestrategie folgende Schritte umfasst: Berechnen eines Soll-Lenkradwinkels als Funktion des Ist-Radlenkwinkels durch eine Steuerung, Berechnen eines Soll-Radlenkwinkels als Funktion des Ist-Lenkradwinkels durch die Steuerung, Ausüben eines Drehmomentes auf das Lenkrad als Funktion des Soll-Lenkradwinkels, des Ist-Lenkradwinkels und der vorgegebenen Übergabezeit durch die Lenkradstelleinrichtung, Ausüben eines Drehmomentes auf die Radlenkung als Funktion des Soll-Radlenkwinkels, des Ist-Radlenkwinkels und der vorgegebenen Übergabezeit durch die Radlenkungsstelleinrichtung. Diese Übergabestrategien stellt eine Kombination aus den beiden vorherigen Übergabestrategien dar. Durch Ausüben des Drehmomentes sowohl auf die Radlenkung als auch auf das Lenkrad werden die Räder und das Lenkrad wieder in Stellungen gebracht, in der der Lenkradwinkel mit dem Radlenkwinkel übereinstimmt. Übereinstimmen heißt dabei wiederum, dass der Lenkradwinkel bzw. der Radlenkwinkel auf einen solche Wert gebracht werden, die sie angenommen hätten, wenn das Lenkrad und die Radlenkung während des automatisierten Fahrmanövers nicht entkoppelt gewesen wären. Dabei können sich der Lenkradwinkel und der Radlenkwinkel in der Mitte einer Ausgangsdifferenz oder auch an einem anderen Punkt zwischen Ausgangsstellungen treffen. Das auf die Räder und das Lenkrad jeweils ausgeübte Drehmoment kann dabei proportional einem Differenzwert zwischen dem Soll-Lenkradwinkel bzw. Soll-Radlenkwinkel und dem Ist-Lenkradwinkel bzw. dem Ist-Radlenkwinkel sein. Prinzipiell sind aber auch andere Regelungsverfahren möglich, beispielsweise unter Berücksichtigung integraler und/oder differentieller Anteile (z.B. PID-Regler).

Erfindungsgemäß ist vorgesehen, dass die Steuerung die Übergabestrategie über ein Auswahlkriterium auswählt. Dies hat den Vorteil, dass die Übergabestrategie nicht von vornherein feststeht, sondern flexibel angepasst werden kann. So kann stets adäquat auf eine vorliegende Situation reagiert werden.

Erfindungsgemäß ist dabei vorgesehen, dass ein Verkehrszustand durch eine Verkehrszustand-Erkennungseinrichtung erkannt wird und das Auswahlkriterium durch die Steuerung alternativ oder zusätzlich auf Grundlage des erkannten Verkehrszustandes festgelegt wird. Beispielsweise kann der Verkehrszustand eine Verkehrsdichte, einen Verkehrsfluss, eine Eigengeschwindigkeit und Geschwindigkeiten anderer Kraftfahrzeuge, eine Straßenart, einen Straßenzustand usw. umfassen. In Abhängigkeit eines Vorliegens eines vorbestimmten Verkehrszustandes kann dann eine diesem Verkehrszustand zugeordnete Übergabestrategie ausgewählt und durchgeführt werden. Liegt beispielsweise auf einer Autobahn ein dichter Verkehr, aber ein flüssiger Verkehrsfluss vor, so wird nach einem automatisierten Fahrmanöver die Übergabestrategie ausgeführt, bei der der Lenkradwinkel an den Radlenkwinkel angeglichen wird. Ist die Verkehrssituation entspannter, beispielsweise auf einer Landstraße mit wenig Verkehr, so wird nach einem automatisierten Fahrmanöver die Übergabestrategie ausgeführt, bei der der Radlenkwinkel an den Lenkradwinkel angeglichen wird.

In einer weiteren Ausführungsform ist ferner vorgesehen, dass ein Fahrerzustand durch eine Fahrerzustand-Erkennungseinrichtung erkannt wird und das Auswahlkriterium durch die Steuerung alternativ oder zusätzlich auf Grundlage des erkannten Fahrerzustandes festgelegt wird. Dies ermöglicht eine flexible Auswahl der Übergabestrategie in Abhängigkeit des erkannten Fahrerzustandes. Ist ein Fahrer beispielsweise vor, bei und/oder nach dem automatisierten Fahrmanöver unaufmerksam, übermüdet oder abgelenkt, so wird dies bei der Auswahl der Übergabestrategie berücksichtigt. Beispielsweise wird in dieser Situation die Übergabestrategie ausgewählt, bei der lediglich der Lenkradwinkel an den Radlenkwinkel angepasst wird. Ist der Fahrer hingegen entspannt und aufmerksam, so wird beispielsweise die Übergabestrategie ausgewählt, bei der der Radlenkwinkel an den Lenkradwinkel angepasst wird. Der Fahrer ist dann aufmerksam genug, das Anpassen zu verfolgen und in die Planung einer zukünftigen Fahrt mit einzubeziehen.

Ferner ist in einer Ausführungsform vorgesehen, dass das Auswahlkriterium durch die Steuerung alternativ oder zusätzlich auf Grundlage des durchgeführten automatisierten Fahrmanövers festgelegt wird. Dabei ist im Wesentlichen die Art des automatisierten Fahrmanövers entscheidend. Ist das automatisierte Fahrmanöver beispielsweise durchgeführt worden, um eine Kollision mit einem entgegenkommenden anderen Kraftfahrzeug zu vermeiden, so ist die Übergabestrategie anders zu wählen, als wenn lediglich einem durch eine schwer einsehbare Baustelle geänderten Verlauf einer Fahrspur gefolgt wurde. Je nach Art des automatisierten Fahrmanövers wird also eine entsprechende Übergabestrategie ausgewählt und durchgeführt.

In einer weiteren Ausführungsform ist vorgesehen, dass Kartendaten von einer Navigationseinrichtung bereitgestellt werden und das Auswahlkriterium durch die Steuerung alternativ oder zusätzlich auf Grundlage der bereitgestellten Kartendaten festgelegt wird. Dies ermöglicht eine vorausschauende Auswahl der Übergabestrategie, indem auch eine zukünftige Fahrstrecke und zukünftig befahrene Straßen oder Wege berücksichtigt werden.

In einer Ausführungsform ist insbesondere vorgesehen, dass die vorgegebene Übergabezeit auf Grundlage eines erkannten Verkehrszustandes und/oder eines erkannten Fahrerzustandes und/oder des durchgeführten automatisierten Fahrmanövers und/oder von bereitgestellten Kartendaten durch die Steuerung festgelegt wird. Dies hat den Vorteil, dass die Zeit, die zum Ausführen der Übergabestrategie benötigt wird, flexibel angepasst werden kann. So kann bei einem kurzen automatisierten Fahrmanöver eine kurze Übergabezeit gewählt werden, da eine Gesamtzeit von automatisiertem Fahrmanöver und der Übergabe kurz ist. Bei einem länger andauernden automatisierten Fahrmanöver wird hingegen eine längere Übergabezeit gewählt, so dass der Fahrer des Kraftfahrzeugs ausreichend Zeit hat, die Übergabe zu erfassen und zu verarbeiten.

Ferner ist es auch möglich, dass die Übergangsstrategie fest vorgegeben ist. Auf diese Weise kann einer individuellen Präferenz des Fahrers Rechnung getragen werden. Der Fahrer kann dann eine Übergabestrategie fest auswählen, beispielsweise jene, welche der Fahrer als am komfortabelsten oder am wenigsten störend empfindet.

Insbesondere kann das erfindungsgemäße Verfahren und die Vorrichtung zum Wiederankoppeln eines Lenkrades an eine Radlenkung nach einer regulären automatisierten Fahrt verwendet werden. Mit regulär ist hierbei gemeint, dass es sich nicht um einen Eingriff in eine manuell gesteuerte oder andere automatisierte Fahrt, beispielsweise zum Verhindern einer Kollision, handelt. Wird dann beispielsweise bei einer regulären automatisierten Fahrt das Lenkrad entkoppelt oder blockiert, so muss das Lenkrad vor Beenden der regulären automatisierten Fahrt wieder an die Radlenkung angekoppelt werden, damit ein Fahrer über einen Radlenkwinkel informiert ist und die manuelle Kontrolle über das Kraftfahrzeug übernehmen kann.

Teile der Vorrichtung können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:

Fig. 1    eine schematische Darstellung einer Ausführungsform der Vorrichtung zum Anpassen eines Lenkradwinkels eines Lenkrades und eines Radlenkwinkels einer Radlenkung in einem Kraftfahrzeug nach einem durchgeführten automatisierten Fahrmanöver;

Fig. 2a    eine schematische Darstellung einer als Überlagerungssystem ausgebildeten Lenkung in einem Kraftfahrzeug (Stand der Technik);

Fig. 2b    eine schematische Darstellung einer als Steer-by-Wire ausgebildeten Lenkung in einem Kraftfahrzeug (Stand der Technik);

Fig. 3a    eine schematische Darstellung eines erfindungsgemäßen Verfahrens zum Anpassen eines Lenkradwinkels eines Lenkrades und eines Radlenkwinkels einer Radlenkung in einem Kraftfahrzeug nach einem durchgeführten automatisierten Fahrmanöver in einem Überlagerungslenkungssystem;

Fig. 3b    eine schematische Darstellung eines erfindungsgemäßen Verfahrens zum Anpassen eines Lenkradwinkels eines Lenkrades und eines Radlenkwinkels einer Radlenkung in einem Kraftfahrzeug nach einem durchgeführt-

ten automatisierten Fahrmanöver in einem Steer-by-Wire-System;

Fig. 4a    einen schematischen zeitlichen Verlauf einer Anpassung eines Ist-Lenkradwinkels an einen Soll-Lenkradwinkel durch Ausführen des erfindungsgemäßen Verfahrens mit einer Übergabestrategie A;

Fig. 4b    einen schematischen zeitlichen Verlauf einer Anpassung eines Ist-Radlenkwinkels an einen Soll-Radlenkwinkel durch Ausführen des erfindungsgemäßen Verfahrens mit einer Übergabestrategie B;

Fig. 4c    einen schematischen zeitlichen Verlauf einer Anpassung eines Ist-Lenkradwinkels an einen Soll-Lenkradwinkel und eines Ist-Radlenkwinkels an einen Soll-Radlenkwinkel durch Ausführen des erfindungsgemäßen Verfahrens mit einer Übergabestrategie C;

Fig. 5    eine schematische Darstellung einer typischen Verkehrssituation zur Erläuterung des Verfahrens;

Fig. 6    ein schematisches Ablaufdiagramm eines Verfahrens zum Anpassen eines Lenkradwinkels eines Lenkrades und eines Radlenkwinkels einer Radlenkung in einem Kraftfahrzeug nach einem durchgeführten automatisierten Fahrmanöver.

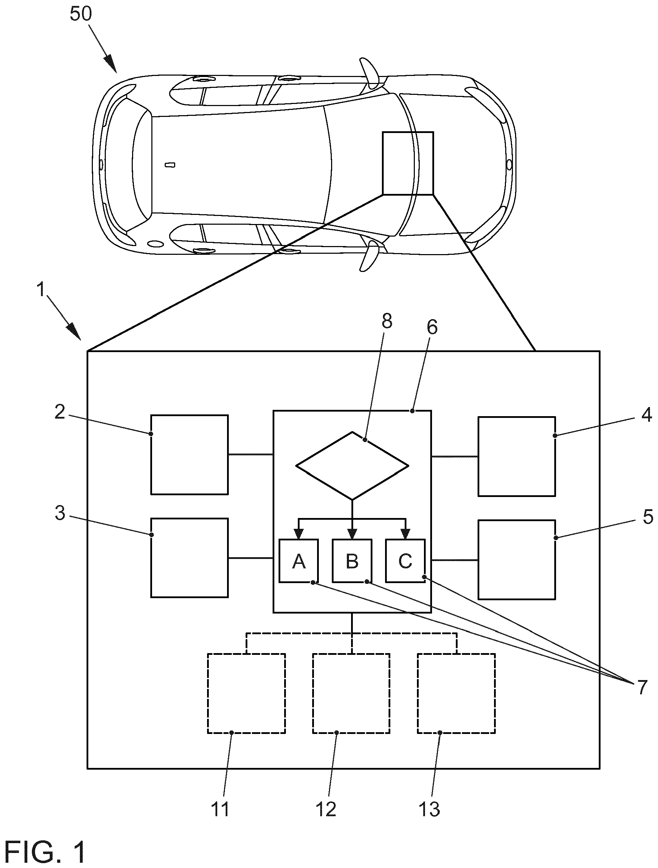

In Fig. 1 ist eine schematische Darstellung einer erfindungsgemäßen Ausführungsform einer Vorrichtung 1 zum Anpassen eines Lenkradwinkels eines Lenkrades und eines Radlenkwinkels einer Radlenkung in einem Kraftfahrzeug 50 nach einem durchgeführten automatisierten Fahrmanöver gezeigt. Die Vorrichtung 1 umfasst eine Lenkradwinkelerfassungseinrichtung 2, eine Radlenkwinkelerfassungseinrichtung 3, eine Lenkradstelleinrichtung 4, eine Radlenkungsstelleinrichtung 5 und eine Steuerung 6.

Als Ausgangssituation sei angenommen, dass ein automatisiertes Fahrmanöver durchgeführt wurde und ein Ist-Lenkradwinkel und ein Ist-Radlenkwinkel des Kraftfahrzeugs 50 nach Beenden des automatisierten Fahrmanövers unter Berücksichtigung einer vorliegenden Übersetzung nicht mehr miteinander übereinstimmen. Die Lenkradwinkelerfassungseinrichtung 2 erfasst fortlaufend den Ist-Lenkradwinkel und die Radlenkwinkelerfassungseinrichtung 3 erfasst fortlaufend den Ist-Radlenkwinkel. Die erfassten Werte für den Ist-Lenkradwinkel und den Ist-Radlenkwinkel werden an die Steuerung 6 weitergeleitet. Die Steuerung 6 überprüft ein Auswahlkriterium 8, beispielsweise ein Vorliegen eines bestimmten Verkehrszustandes, ein Vorliegen eines bestimmten Fahrerzustandes und/oder ein Vorliegen eines bestimmten automatisierten Fahrmanövers und kann auch zusätzlich Informationen, wie beispielsweise eine Straßenkarte eines Umfeldes des Kraftfahrzeugs 50 berücksichtigen, und wählt eine Übergabestrategie 7 aus. Ist die Übergabestrategie 7 ausgewählt, so berechnet die Steuerung 6 einen Soll-Lenkradwinkel bzw. einen Soll-Radlenkungswinkel. Anschließend wird die Übergabestrategie 7 durch die Steuerung 6 ausgeführt. Dazu steuert die Steuerung 6 die Lenkradstelleinrichtung 4 und die Radlenkungsstelleinrichtung 5. Je nach der ausgewählten Übergabestrategie 7 wird der Ist-Lenkradwinkel und/oder der Ist-Radlenkwinkel durch Anlegen eines entsprechenden Drehmomentes solange verändert, bis der Ist-Lenkradwinkel und/oder der Ist-Radlenkwinkel mit einem Soll-Lenkradwinkel und/oder Soll-Radlenkwinkel übereinstimmen. Das Drehmoment wird durch die Lenkradstelleinrichtung 4 bzw. die Radlenkungsstelleinrichtung 5 bewirkt. Stimmen der jeweilige Ist- und der Sollwinkel wieder überein, ist das Verfahren zum Anpassen beendet und der Lenkradwinkel und der Radlenkwinkel sind wieder aneinander angekoppelt. Bei einer zukünftigen Fahrt bewegen sich das Lenkrad und die Radlenkung fortan wieder zusammen, gegebenenfalls im Verhältnis einer vorgegebenen Übersetzung.

Die Vorrichtung 1 kann ferner noch eine Verkehrszustand-Erkennungseinrichtung 11 zum Erkennen eines Verkehrszustandes, eine Fahrerzustand-Erkennungseinrichtung 12 zum Erkennen eines Fahrerzustandes und/oder eine Navigationseinrichtung 13 zum Bereitstellen von Kartendaten und sonstigen Informationen zum Umfeld des Kraftfahrzeugs 50 aufweisen. Ein erkannter Verkehrszustand, ein erkannter Fahrerzustand und/oder die Kartendaten und sonstigen Informationen können dann bei der Auswahl der Übergabestrategie 7 entsprechend mit einbezogen werden.

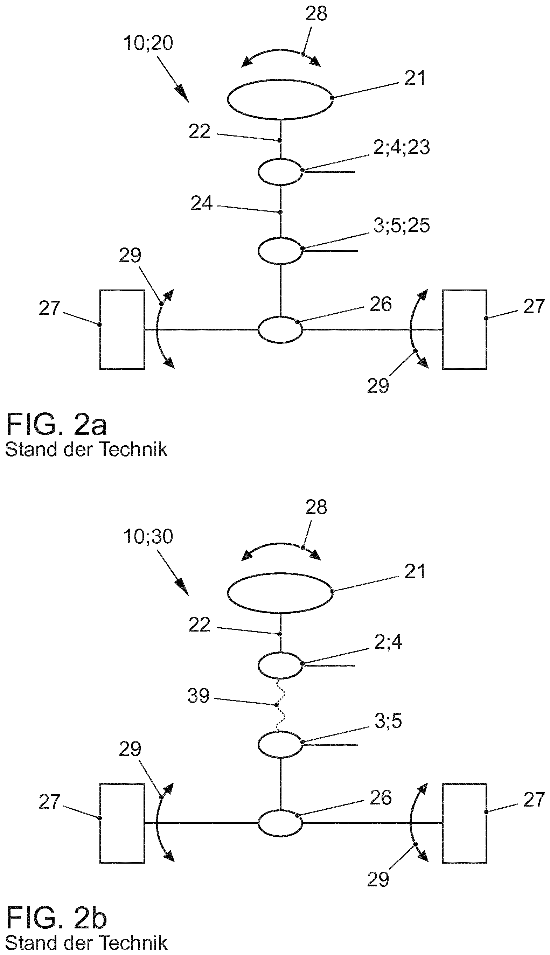

Fig. 2a zeigt eine schematische Darstellung einer als Überlagerungssystem 20 ausgebildeten Lenkung 10 in einem Kraftfahrzeug aus dem Stand der Technik. Beim Überlagerungssystem 20 ist ein Lenkrad 21 des Kraftfahrzeugs über eine mechanische Verbindung 22 mit einem Planetengetriebe 23 verbunden. Das Planetengetriebe 23 weist eine Lenkradstelleinrichtung 4 und eine Lenkradwinkelerfassungseinrichtung 2 auf. Das Planetengetriebe 23 ist über eine weitere mechanische Verbindung 24 mit einem weiteren Planetengetriebe 25 verbunden. Das weitere Planetengetriebe 25 weist eine Radlenkungsstelleinrichtung 5 und eine Radlenkwinkelerfassungseinrichtung 3 auf. Über eine Radlenkung 26 ist das weitere Planetengetriebe 25 mit den Rädern 27 verbunden. Die Planetengetriebe 23, 25 ermöglichen es, einen Ist-Lenkradwinkel 28 von einem Ist-Radlenkwinkel 29 abzukoppeln und eine Übersetzung zwischen den Winkeln durch Addition oder Subtraktion von Drehmomenten nahezu beliebig zu wählen. Dies hat zur Folge, dass beispielsweise nach einer automatisierten Fahrt, bei der der Ist-Radlenkwinkel 29 automatisiert gesteuert wird, während der Ist-Lenkradwinkel 28 unverändert bleibt, eine Differenz zwischen dem Ist-Lenkradwinkel 28 und dem Ist-Radlenkwinkel 29 entsteht, der später wieder abgebaut werden muss.

Die Fig. 2b zeigt eine schematische Darstellung einer als Steer-by-Wire-Systems 30 ausgebildeten Lenkung 10 in einem Kraftfahrzeug aus dem Stand der Technik. Im Gegensatz zum Überlagerungssystem 20, bei dem es immer noch eine mechanische Verbindung zwischen dem Lenkrad 21 und der Radlenkung 26 gibt, sind das Lenkrad 21 und die Radlenkung 26 beim Steer-by-Wire-System 30 mechanisch vollständig entkoppelt. Dazu ist das Lenkrad 21 über eine mechanische Verbindung 22 mit einer Lenkradstelleinrichtung 4 und einer Lenkradwinkelerfassungseinrichtung 2 verbunden. Ferner weist das Steer-by-Wire-System 30 eine Radlenkungsstelleinrichtung 5 und eine Radlenkwinkelerfassungseinrichtung 3 auf, welche über eine weitere mechanische Verbindung 24 mit der Radlenkung 26 verbunden sind. Die Lenkradstelleinrichtung 4 und die Lenkradwinkelerfassungseinrichtung 2 sind lediglich über eine logische Verbindung 39 mit der Radlenkungsstelleinrichtung 5 und der Radlenkwinkelerfassungseinrichtung 3 verbunden. Die Lenkradwinkelerfassungseinrichtung 2 erfasst eine durch einen Fahrer verursachte Änderung des Ist-Lenkradwinkels 28 am Lenkrad 21 und weist die Radlenkungsstelleinrichtung 5 (logisch) an, entsprechend einer vorgegebenen Übersetzung den Ist-Radlenkwinkel 29 durch Anlegen eines Drehmomentes über die Radlenkung 26 zu verändern. Umgekehrt wird eine Änderung des Ist-Radlenkwinkels 29 von der Radlenkwinkelerfassungseinrichtung 3 erfasst und (logisch) an die Lenkradstelleinrichtung 4 weitergeleitet. Die Lenkradstelleinrichtung 4 verändert dann den Ist-Lenkradwinkel 28 durch Anlegen eines entsprechenden Drehmomentes. Somit gibt es in beide Richtungen eine Ankopplung. Beim oder nach Durchführen eines automatisierten Fahrmanövers, beispielsweise zum Vermeiden einer Kollision, kann es jedoch vorkommen, dass der Ist-Lenkradwinkel 28 und der Ist-Radlenkwinkel 29 auseinanderfallen, beispielsweise, wenn das Lenkrad 21 nach links weist, die Räder 27 aber nach rechts eingeschlagen sind. Vor einem Wiederankoppeln ist dann ein Angleichen der beiden Winkel 28, 29 notwendig.

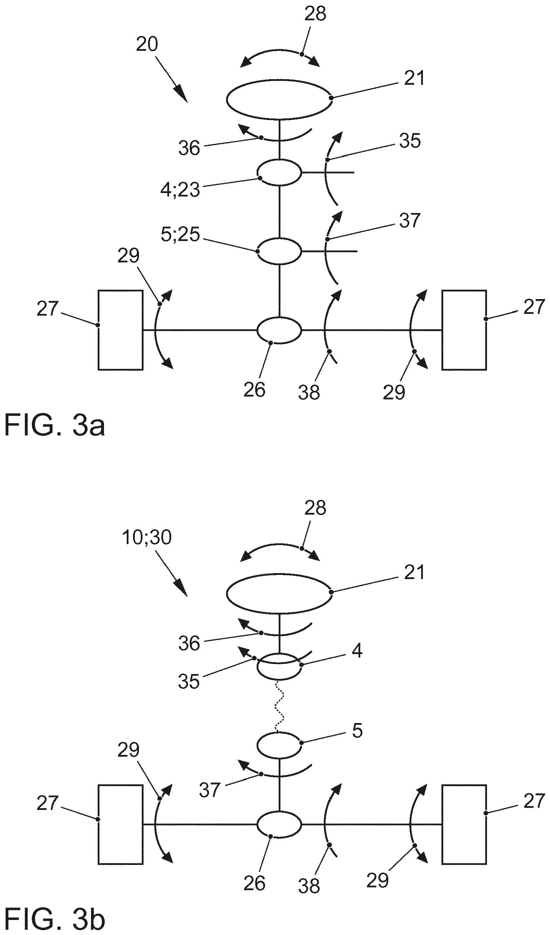

Fig. 3a zeigt eine schematische Darstellung einer Ausgangssituation für ein erfindungsgemäßen Verfahren zum Anpassen des Ist-Lenkradwinkels 28 des Lenkrades 21 und des Ist-Radlenkwinkels 29 der Radlenkung 26 in einem Kraftfahrzeug nach einem durchgeführten automatisierten Fahrmanöver in einem Überlagerungslenkungssystem 20. Im Folgenden wird unterschieden zwischen vier verschiedenen Drehmomenten 35, 36, 37, 38: Durch Ausüben eines Stell-Drehmoments 35 ($M_{Stell1}$) auf das Planetengetriebe 23 kann die Lenkradstelleinrichtung 4 ein Lenkrad-Drehmoment 36 ($M_{Lenkrad}$) auf das Lenkrad 21 ausüben. Durch Ausüben eines weiteren Stell-Drehmoments 37 ($M_{Stell2}$) über das weitere Planetengetriebe 25 und die Radlenkung 26 kann die Radlenkungsstelleinrichtung 5 ferner einen Radlenk-Drehmoment 38 ($M_{Rad}$) ausüben.

Ist $M_{Stell1} = M_{Stell2} = \infty$, so existiert keine Entkopplung zwischen dem Lenkrad 21 und den Rädern 27. Das Lenkrad-Drehmoment 36 gelangt direkt zu den Rädern 27 auf die Straße und das Radlenk-Drehmoment 38 der Räder 27 gelangt direkt an den Fahrer.

Damit eine Ausweichfunktion das Kraftfahrzeug durch eine automatisierte Fahrt auf eine Trajektorie zwingen und den Fahrer dabei entkoppeln kann, muss gelten:

$$M_{Rad} = M_{Funktionsvorgabe},$$

wobei $M_{Funktionsvorgabe}$ ein Drehmoment ist, das die Ausweichfunktion zum Ausweichen für die Räder 27 vorsieht, das heißt, die Funktion zum Ausweichen zwingt das Kraftfahrzeug auf die Trajektorie. Um das Lenkrad 21 von den Rädern 27 zu entkoppeln gibt es zwei Möglichkeiten. Erstens kann das Lenkrad 21 komplett freigängig sein, das heißt, der Fahrer bekommt von dem Ausweichmanöver nichts mit. Dann muss gelten:

$$M_{Lenkrad} = 0.$$

Zweitens kann das Lenkrad 21 auch blockiert werden, dann muss gelten:

$$M_{Lenkrad} = \infty.$$

Fig. 3b zeigt eine schematische Darstellung einer Ausgangssituation für ein erfindungsgemäßen Verfahren zum Anpassen des Ist-Lenkradwinkels 28 des Lenkrades 21 und des Ist-Radlenkwinkels 29 der Radlenkung 26 in einem Kraftfahrzeug nach einem durchgeführten automatisierten Fahrmanöver in einem Steer-by-Wire-System 30. Im Prinzip treten die gleichen vier Drehmomente 35, 36, 37, 38 wie bei dem Überlagerungssystem auf: Auf das Lenkrad 21 kann die Lenkradstelleinrichtung 4 durch Ausüben eines Stell-Drehmoments 35 ($M_{Stell1}$) ein Lenkrad-Drehmoment 36 ($M_{Lenkrad}$) auf das Lenkrad 21 ausüben. Ferner kann die Radlenkungsstelleinrichtung 5 durch Ausüben eines weiteren Stell-Drehmoments 37 ($M_{Stell2}$) über die Radlenkung 26 einen Radlenk-Drehmoment 38 ($M_{Rad}$) ausüben.

Sind $M_{Stell1} = M_{Rad}$ und $M_{Stell2} = M_{Lenkrad}$, dann existiert keine Lenkunterstützung und das von einem Fahrer über das Lenkrad 21 ausgeübte Drehmoment gelangt direkt an die Räder 27 und damit auf die Straße. Umgekehrt gelangt ein Drehmoment der Räder 27 direkt über das Lenkrad 21 an den Fahrer.

Damit eine Ausweichfunktion das Kraftfahrzeug durch eine automatisierte Fahrt auf eine Trajektorie zwingen und den Fahrer dabei entkoppeln kann, muss wie für das Überlagerungssystem gelten:

$$M_{Rad} = M_{Funktionsvorgabe},$$

wobei $M_{Funktionsvorgabe}$ ein Drehmoment ist, das die Ausweichfunktion zum Ausweichen für die Räder 27 vorsieht, das heißt, die Funktion zum Ausweichen zwingt das Kraftfahrzeug auf die Trajektorie. Um das Lenkrad 21 von den Rädern 27 zu entkoppeln gibt es wiederum zwei Möglichkeiten. Erstens kann das Lenkrad 21 komplett freigängig sein, das heißt, der Fahrer bekommt von dem Ausweichmanöver nichts mit. Dann muss gelten:

$$M_{Lenkrad} = 0.$$

Zweitens kann das Lenkrad 21 auch blockiert werden, dann muss gelten:

$$M_{Lenkrad} = \infty.$$

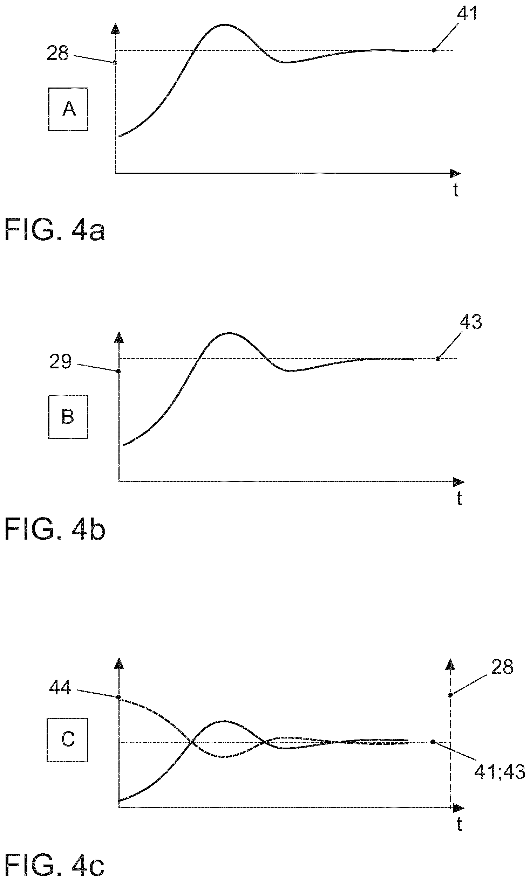

Fig. 4a zeigt einen schematischen zeitlichen Verlauf einer Anpassung eines Ist-Lenkradwinkels 28 ($LW_{Ist}$) an einen Soll-Lenkradwinkel 41 ($LW_{Soll}$) durch Ausführen des erfindungsgemäßen Verfahrens mit einer Übergabestrategie, welche hier mit dem lateinischen Buchstaben "A" gekennzeichnet ist. Ausgangssituation ist die in den Figuren 3a und 3b geschilderte Situation nach Durchführen einer automatisierten Fahrt, wobei das Lenkrad entkoppelt oder blockiert wurde, so dass ein Anpassen des Lenkradwinkels und des Radlenkwinkels notwendig ist.

Im ersten Schritt berechnet eine Steuerung den Soll-Lenkradwinkel 41. Im einfachsten Fall ist der Soll-Lenkradwinkel 41 beispielsweise der Lenkradwinkel, den das Lenkrad ohne eine Entkopplung von dem Ist-Radlenkwinkel der Radlenkung aufweisen würde.

Um den Ist-Lenkradwinkel 28 ($LW_{Ist}$) an den Soll-Lenkradwinkel 41 ($LW_{Soll}$) anzupassen, wird bei der Übergabestrategie A ein Lenkrad-Drehmoment ($M_{Lenkrad}$) auf das Lenkrad beispielsweise nach folgender Funktion ausgeübt:

$$M_{Lenkrad} = k * (LW_{Ist} - LW_{Soll}) / t_{Rest},$$

wobei k eine Reglerverstärkung ist und $t_{Rest}$ eine Restzeit bis zum vollständigen Anpassen des Ist-Lenkradwinkels 28 an den Soll-Lenkradwinkel 41. Fig. 4a zeigt dabei den typischen Verlauf beim "Einregeln" des Ist-Lenkradwinkels 28 auf den Soll-Lenkradwinkel 41. Auf die Räder wird hingegen kein Drehmoment ausgeübt. Ist die Restzeit $t_{Rest}$ abgelaufen, stimmt der Ist-Lenkradwinkel 28 mit dem Soll-Lenkradwinkel 41 überein und das Verfahren zum Anpassen wird beendet. Das Lenkrad ist wieder über die Radlenkung an die Räder angekoppelt. Ein Fahrer bzw. ein anderes automatisches System kann nun wieder direkt die Lenkung übernehmen.

Fig. 4b zeigt einen schematischen zeitlichen Verlauf einer Anpassung eines Ist-Radlenkwinkels 29 ($RLW_{Ist}$) an einen Soll-Radlenkwinkel 43 ($RLW_{Soll}$) durch Ausführen des erfindungsgemäßen Verfahrens mit einer Übergabestrategie, welche hier mit dem lateinischen Buchstaben "B" gekennzeichnet ist. Ausgangssituation ist die in den Figuren 3a und 3b geschilderte Situation nach Durchführen eines automatisierten Fahrt, wobei das Lenkrad entkoppelt oder blockiert wurde, so dass ein Anpassen des Lenkradwinkels und des Radlenkwinkels notwendig ist.

Im ersten Schritt berechnet die Steuerung wiederum den Soll-Radlenkwinkel 43. Im einfachsten Fall ist der Soll-Radlenkwinkel 43 beispielsweise der Radlenkwinkel, den die Radlenkung ohne eine Entkopplung von dem Ist-Lenkradwinkel des Lenkrades aufweisen würde.

Um den Ist-Radlenkwinkel 29 ($LW_{Ist}$) an den Soll-Radlenkwinkel 43 ($RLW_{Soll}$) anzupassen, wird in der Übergabestrategie B ein Rad-Drehmoment ($M_{Rad}$) auf die Radlenkung bzw. die Räder beispielsweise nach folgender Funktion ausgeübt:

$$M_{Rad} = k * (RLW_{Ist} - RLW_{Soll}) / t_{Rest},$$

wobei k eine Reglerverstärkung ist und $t_{Rest}$ eine Restzeit bis zum vollständigen Anpassen des Ist-Radlenkwinkels 29 an den Soll-Radlenkwinkel 43. Fig. 4b zeigt dabei den typischen Verlauf beim "Einregeln" des Ist-Radlenkwinkels 29 auf den Soll-Radlenkwinkel 43. Auf das Lenkrad wird hingegen kein Drehmoment ausgeübt. Ist die Restzeit $t_{Rest}$ abgelaufen, stimmt der Ist-Radlenkwinkel 29 mit dem Soll-Radlenkwinkel 43 überein und das Verfahren zum Anpassen wird beendet. Das Lenkrad ist dann wieder über die Radlenkung an die Räder angekoppelt. Ein Fahrer bzw. ein anderes automatisches System kann nun wieder direkt die Lenkung übernehmen.

Fig. 4c zeigt einen schematischen zeitlichen Verlauf einer zeitgleichen Anpassung sowohl eines Ist-Lenkradwinkels 28 ($LW_{Ist}$) an einen Soll-Lenkradwinkel 41 ($LW_{Soll}$) als auch eines Ist-Radlenkwinkels 29 ($RLW_{Ist}$) an einen Soll-Radlenkwinkel 43 ($RLW_{Soll}$) durch Ausführen des erfindungsgemäßen Verfahrens mit einer Übergabestrategie, welche hier mit dem lateinischen Buchstaben "C" gekennzeichnet ist. Ausgangssituation ist die in den Figuren 3a und 3b geschilderte Situation nach Durchführen eines automatisierten Fahrt, wobei das Lenkrad entkoppelt oder blockiert wurde, so dass ein Anpassen des Lenkradwinkels und des Radlenkwinkels notwendig ist.

Im ersten Schritt berechnet die Steuerung sowohl den Soll-Lenkradwinkel 41 als auch den Soll-Radlenkwinkel 43. Dabei liegt der Soll-Lenkradwinkel 41 zwischen dem Ist-Lenkradwinkel 28 und dem Lenkradwinkel, den das Lenkrad ohne eine Entkopplung von der Radlenkung aufweisen würde. Der Soll-Radlenkwinkel 43 liegt zwischen dem Ist-Radlenkwinkel 29 und dem Radlenkwinkel, den die Radlenkung ohne eine Entkopplung von dem Lenkrad aufweisen würde. Im einfachsten Fall berechnet sich der Soll-Lenkradwinkel 41 beispielsweise als ein arithmetischer Mittelwert zwischen dem Ist-Lenkradwinkel 28 und dem Lenkradwinkel, den das Lenkrad ohne eine Entkopplung oder Blockierung aufweisen würde. Analog dazu berechnet sich der Soll-Radlenkwinkel 43 dann als ein arithmetischer Mittelwert zwischen dem Ist-Radlenkwinkel 29 und dem Radlenkwinkel, den die Radlenkung ohne eine Entkopplung oder Blockierung bezüglich eines Ist-Lenkradwinkels 28 des Lenkrades aufweisen würde.

Es ist ebenso möglich, dass als Sollwerte nicht die arithmetischen Mittelwerte gewählt werden, sondern Werte, bei denen ein Anpassen entsprechend einem vorbestimmten Verhältnis auf das Lenkrad und die Radlenkung (z.B. zu 1/3 am Lenkrad und zu 2/3 an der Radlenkung usw.) verteilt werden.

Um den Ist-Lenkradwinkel 28 ($LW_{Ist}$) an den Soll-Lenkradwinkel 41 ($LW_{Soll}$) anzupassen, wird in der Übergabestrategie C ein Lenkrad-Drehmoment ($M_{Lenkrad}$) auf das Lenkrad beispielsweise nach folgender Funktion ausgeübt:

$$M_{Lenkrad} = k_1 * (LW_{Ist} - g * LW_{Soll}) / t_{Rest},$$

wobei $k_1$ eine Reglerverstärkung ist, g ein Umrechnungsfaktor einer Übersetzung, beispielsweise von Planetengetrieben in einem Überlagerungssystem, und $t_{Rest}$ eine Restzeit bis zum vollständigen Anpassen des Ist-Lenkradwinkels 28 an den Soll-Lenkradwinkel 41.

Um zeitgleich den Ist-Radlenkwinkel 29 ($LW_{Ist}$) an den Soll-Radlenkwinkel 43 ($RLW_{Soll}$) anzupassen, wird in der Übergabestrategie C ein Rad-Drehmoment ($M_{Rad}$) auf die Radlenkung bzw. die Räder beispielsweise nach folgender Funktion ausgeübt:

$$M_{Rad} = k_2 * (g * RLW_{Ist} - RLW_{Soll}) / t_{Rest},$$

wobei $k_2$ eine entsprechende Reglerverstärkung ist, g der Umrechnungsfaktor der Übersetzung und $t_{Rest}$ eine Restzeit bis zum vollständigen Anpassen des Ist-Radlenkwinkels 29 an den Soll-Radlenkwinkel 43.

Fig. 4c zeigt dabei den typischen Verlauf beim "Einregeln" des Ist-Lenkradwinkels 41 auf den Soll-Lenkradwinkel 43 und des Ist-Radlenkwinkels 29 auf den Soll-Radlenkwinkel 43, wobei der Ist-Radlenkwinkel 29 mit dem Umrechnungsfaktor g multipliziert als angepasster Ist-Radlenkwinkel 44 dargestellt ist. Sowohl auf das Lenkrad als auch die Radlenkung wird ein entsprechendes Drehmoment ausgeübt. Ist die Restzeit $t_{Rest}$ abgelaufen, stimmen der Ist-Lenkradwinkel 41 mit dem Soll-Lenkradwinkel 41 und der Ist-Radlenkwinkel 29 mit dem Soll-Radlenkwinkel 43 überein und das Verfahren zum Anpassen wird beendet. Das Lenkrad ist dann wieder über die Radlenkung an die Räder angekoppelt. Ein Fahrer bzw. ein anderes automatisches System kann nun wieder direkt die Lenkung übernehmen.

Die hier beispielhaft beschriebenen Funktionen zum Berechnen der Drehmomente für die Übergabestrategien A, B und C können auch anders ausgebildet sein.

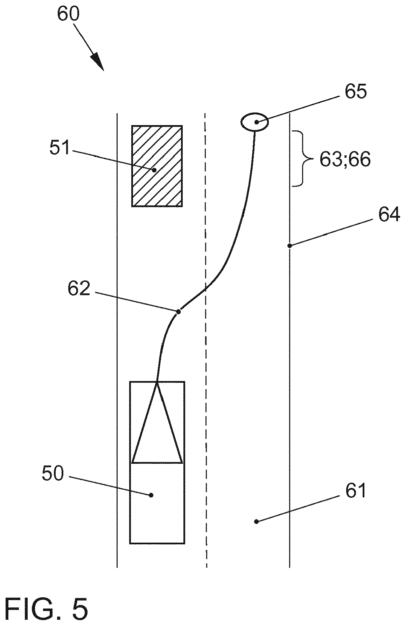

In Fig. 5 ist eine typische Verkehrssituation 60 zur Erläuterung des erfindungsgemäßen Verfahrens dargestellt. Ein Kraftfahrzeug 50 befindet sich auf einer Straße 61. Das Kraftfahrzeug 50 wird durch einen Fahrer manuell oder durch ein automatisches System automatisiert gefahren. Ein Assistenzsystem erkennt eine mögliche Kollision mit einem entgegenkommenden anderen Kraftfahrzeug 51. Das Assistenzsystem übernimmt eine Fahrzeugführung und löst ein Ausweichmanöver 62 aus, wobei das Kraftfahrzeug 50 die Fahrspur nach rechts wechselt. Nachdem das Ausweichmanöver 62 beendet ist und das Assistenzsystem die Verkehrssituation 60 wieder als sicheren Zustand 65 bewertet, findet in einem Übergabebereich 63 eine Übergabe der Fahrzeugführung zurück an den Fahrer oder das automatische System nach dem erfindungsgemäßen Verfahren statt. Ein sicherer Zustand 65 der Verkehrssituation 60 liegt beispielsweise vor, wenn ein Abstand des Kraftfahrzeugs 50 zum Fahrbahnrand 64, eine Fahrtrichtung und/oder eine Geschwindigkeit als sicher eingestuft werden. Der Übergabebereich 63 wird beispielsweise bestimmt durch eine vorgegebene Übergabezeit 66 vor Ende des Ausweichmanövers 62, wobei die Übergabezeit 66 beispielsweise 300 Millisekunden beträgt. Innerhalb dieser Übergabezeit 66 findet dann erfindungsgemäß das Anpassen eines Lenkradwinkels und eines Radlenkwinkels und eine Rückübergabe der Fahrzeugführung an den Fahrer oder das automatische System statt.

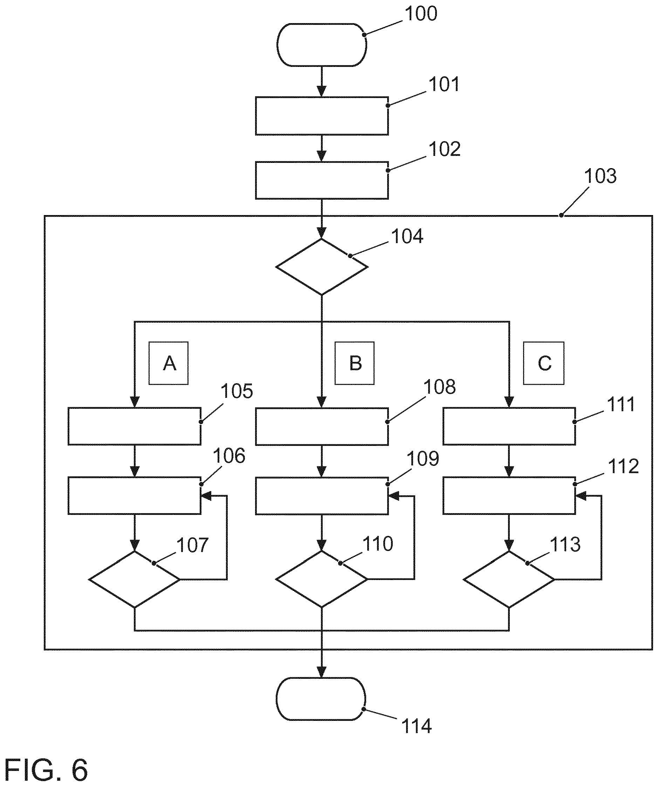

Fig. 6 zeigt ein schematisches Ablaufdiagramm eines Verfahrens zum Anpassen eines Lenkradwinkels eines Lenkrades und eines Radlenkwinkels einer Radlenkung in einem Kraftfahrzeug nach einem durchgeführten automatisierten Fahrmanöver. Vor einem Ende des automatisiert durchgeführten Fahrmanövers wird das Verfahren gestartet 100. In einem ersten Verfahrensschritt 101 wird ein Ist-Lenkradwinkel durch eine Lenkradwinkelerfassungseinrichtung erfasst. Anschließend wird ein Ist-Radlenkwinkel durch eine Radlenkwinkelerfassungseinrichtung erfasst 102. Anschließend werden der Lenkradwinkel durch eine Lenkradstelleinrichtung und der Radlenkwinkel durch eine Radlenkstelleinrichtung angepasst 103. Dazu wählt eine Steuerung nach einem Auswahlkriterium eine Übergabestrategie aus 104. Beispielsweise handelt es sich dabei um die drei bereits beschriebenen Übergabestrategien A, B und C.

Wurde Übergangsstrategie A gewählt, so wird zuerst ein Soll-Lenkradwinkel durch die Steuerung berechnet 105. Anschließend wird der Ist-Lenkradwinkel durch die Lenkradstelleinrichtung durch Ausüben eines Drehmomentes auf das Lenkrad verändert 106. Die Steuerung überprüft dabei fortlaufend, ob der Ist-Lenkradwinkel mit dem Soll-Lenkradwinkel übereinstimmt 107. Ist dies nicht der Fall, wird weiterhin ein Drehmoment auf das Lenkrad ausgeübt 106. Stimmt der Ist-Lenkradwinkel mit dem Soll-Lenkradwinkel überein, so wird das Verfahren beendet 114.

Wurde hingegen Übergangsstrategie B gewählt, so wird zuerst ein Soll-Radlenkwinkel durch die Steuerung berechnet 108. Anschließend wird der Ist-Radlenkwinkel durch die Radlenkstelleinrichtung durch Ausüben eines Drehmomentes auf die Radlenkung verändert 109. Die Steuerung überprüft dabei fortlaufend, ob der Ist-Radlenkwinkel mit dem Soll-Radlenkwinkel übereinstimmt 110. Ist dies nicht der Fall, wird weiterhin ein Drehmoment auf die Radlenkung ausgeübt 109. Stimmt der Ist-Radlenkwinkel mit dem Soll-Radlenkwinkel überein, so wird das Verfahren beendet 114.

Wurde Übergangsstrategie C gewählt, so werden zuerst ein Soll-Lenkradwinkel und ein Soll-Radlenkwinkel durch die Steuerung berechnet 111. Anschließend werden der Ist-Lenkradwinkel durch die Lenkradstelleinrichtung und der Ist-Radlenkwinkel durch die Radlenkstelleinrichtung durch Ausüben jeweils eines Drehmomentes auf das Lenkrad bzw. die Radlenkung verändert 112. Die Steuerung überprüft dabei fortlaufend, ob der Ist-Lenkradwinkel und der Ist-Radlenkwinkel mit dem Soll-Lenkradwinkel bzw. dem Soll-Radlenkwinkel übereinstimmen 113. Ist dies nicht der Fall, wird weiterhin ein Drehmoment auf das Lenkrad bzw. die Radlenkung ausgeübt 112. Stimmen der Ist-Lenkradwinkel mit dem Soll-Lenkradwinkel und der Ist-Radlenkwinkel mit dem Soll-Radlenkwinkel überein, so wird das Verfahren beendet 114.

**Bezugszeichenliste**

| 1 | Vorrichtung |
|---|---|
| 2 | Lenkradwinkelerfassungseinrichtung |
| 3 | Radlenkwinkelerfassungseinrichtung |
| 4 | Lenkradstelleinrichtung |
| 5 | Radlenkungsstelleinrichtung |
| 6 | Steuerung |
| 7 | Übergabestrategie |
| 8 | Auswahlkriterium |
| 10 | Lenkung |
| 11 | Verkehrszustand-Erkennungseinrichtung |
| 12 | Fahrerzustand-Erkennungseinrichtung |
| 13 | Navigationseinrichtung |
| 20 | Überlagerungssystem |
| 21 | Lenkrad |
| 22 | mechanische Verbindung |
| 23 | Planetengetriebe |
| 24 | weitere mechanische Verbindung |
| 25 | Planetengetriebe |
| 26 | Radlenkung |
| 27 | Räder |
| 28 | Ist- Lenkradwinkel |
| 29 | Ist-Radlenkwinkel |
| 30 | Steer-by-Wire-System |
| 35 | Stell-Drehmoment |
| 36 | Lenkrad-Drehmoment |
| 37 | weiteres Stell-Drehmoment |
| 38 | Radlenk-Drehmoment |
| 39 | logische Verbindung |
| 41 | Soll-Lenkradwinkel |
| 43 | Soll-Radlenkwinkel |
| 44 | angepasster Ist-Radlenkwinkel |
| 50 | Kraftfahrzeug |
| 51 | anderes Kraftfahrzeug |
| 60 | Verkehrssituation |
| 61 | Straße |
| 62 | Ausweichmanöver |
| 63 | Übergabebereich |
| 64 | Fahrbahnrand |
| 65 | sicherer Zustand |
| 66 | Übergabezeit |
| 100-114 | Verfahrensschritte |

**Patentansprüche**

1. Verfahren zum Anpassen eines Ist-Lenkradwinkels (28) eines Lenkrades (21) und eines Ist-Radlenkwinkels (29) einer Radlenkung (26) in einem Kraftfahrzeug (50) nach einem durchgeführten automatisierten Fahrmanöver (62), umfassend die folgenden Schritte:

   Erfassen des Ist-Lenkradwinkels (28) durch eine Lenkradwinkelerfassungseinrichtung (2) und des Ist-Radlenkwinkels (29) durch eine Radlenkwinkelerfassungseinrichtung (3),
   Anpassen des Ist-Lenkradwinkels (28) durch eine Lenkradstelleinrichtung (4) und/oder des Ist-Radlenkwinkels (29) durch eine Radlenkungsstelleinrichtung (5) innerhalb einer vorgegebenen Übergabezeit (66) auf Grundlage einer Übergabestrategie (7),
   **dadurch gekennzeichnet, dass**
   die Steuerung (6) die Übergabestrategie (7) über ein Auswahlkriterium (8) auswählt,
   wobei ein Verkehrszustand (60) durch eine Verkehrszustand-Erkennungseinrichtung (11) erkannt wird und das Auswahlkriterium (8) durch die Steuerung (6) alternativ oder zusätzlich auf Grundlage des erkannten Verkehrszustandes festgelegt wird.

2. Verfahren nach Anspruch 1, **dadurch gekennzeichnet, dass** die Übergabestrategie (7) folgende Schritte umfasst:

   Berechnen eines Soll-Lenkradwinkels (41) als Funktion des Ist-Radlenkwinkels (29) durch eine Steuerung (6),

Ausüben eines Drehmomentes (36) auf das Lenkrad (21) als Funktion des Soll-Lenkradwinkels (41), des Ist-Lenkradwinkels (28) und der vorgegebenen Übergabezeit (66) durch die Lenkradstelleinrichtung (4),

solange bis der Ist-Lenkradwinkel (28) dem Soll-Lenkradwinkel (41) entspricht.

3. Verfahren nach Anspruch 1, **dadurch gekennzeichnet, dass** die Übergabestrategie (7) folgende Schritte umfasst:

Berechnen eines Soll-Radlenkwinkels (43) als Funktion des Ist-Lenkradwinkels (28) durch eine Steuerung (6),

Ausüben eines Drehmomentes (38) auf die Radlenkung (26) als Funktion des Soll-Radlenkwinkels (43), des Ist-Radlenkwinkels (29) und der vorgegebenen Übergabezeit (66) durch die Radlenkungsstelleinrichtung (5),

solange bis der Ist-Radlenkwinkel (29) dem Soll-Radlenkwinkel (43) entspricht.

4. Verfahren nach Anspruch 1, **dadurch gekennzeichnet, dass** die Übergabestrategie (7) folgende Schritte umfasst:

Berechnen eines Soll-Lenkradwinkels (41) als Funktion des Ist-Radlenkwinkels (29) durch eine Steuerung (6),

Berechnen eines Soll-Radlenkwinkels (43) als Funktion des Ist-Lenkradwinkels (28) durch die Steuerung (6),

Ausüben eines Drehmomentes (36) auf das Lenkrad (21) als Funktion des Soll-Lenkradwinkels (41), des Ist-Lenkradwinkels (28) und der vorgegebenen Übergabezeit (66) durch die Lenkradstelleinrichtung (4),

Ausüben eines Drehmomentes (38) auf die Radlenkung (26) als Funktion des Soll-Radlenkwinkels (43), des Ist-Radlenkwinkels (29) und der vorgegebenen Übergabezeit (66) durch die Radlenkungsstelleinrichtung (5).

5. Verfahren nach einem der vorangegangenen Ansprüche, **dadurch gekennzeichnet, dass** ein Fahrerzustand durch eine Fahrerzustand-Erkennungseinrichtung (12) erkannt wird und das Auswahlkriterium (8) durch die Steuerung (6) alternativ oder zusätzlich auf Grundlage des erkannten Fahrerzustandes festgelegt wird.

6. Verfahren nach einem der vorangegangenen Ansprüche, **dadurch gekennzeichnet, dass** das Auswahlkriterium (8) durch die Steuerung (6) alternativ oder zusätzlich auf Grundlage des durchgeführten automatisierten Fahrmanövers (62) festgelegt wird.

7. Verfahren nach einem der vorangegangenen Ansprüche, **dadurch gekennzeichnet, dass** Kartendaten von einer Navigationseinrichtung (13) bereitgestellt werden und das Auswahlkriterium (8) durch die Steuerung (6) alternativ oder zusätzlich auf Grundlage der bereitgestellten Kartendaten festgelegt wird.

8. Vorrichtung (1) in einem Kraftfahrzeug (50) zum Anpassen eines Ist-Lenkradwinkels (28) eines Lenkrades (21) und eines Ist-Radlenkwinkels (29) einer Radlenkung (26) nach einem durchgeführten automatisierten Fahrmanöver (62), umfassend:

eine Lenkradwinkelerfassungseinrichtung (2) zum Erfassen des Ist-Lenkradwinkels (28),

eine Radlenkwinkelerfassungseinrichtung (3) zum Erfassen des Ist-Radlenkwinkels (29),

eine Lenkradstelleinrichtung (4) zum Einstellen des Ist-Lenkradwinkels (28),

eine Radlenkungsstelleinrichtung (5) zum Einstellen eines Ist-Radlenkwinkels (29),

eine Steuerung (6),

wobei die Steuerung (6) derart ausgebildet ist, auf Grundlage einer Übergabestrategie (7) ein Anpassen des Ist-Lenkradwinkels (28) durch die Lenkradstelleinrichtung (4) und/oder des Ist-Radlenkwinkels (29) durch die Radlenkungsstelleinrichtung (5) zu veranlassen,

**dadurch gekennzeichnet, dass**

die Vorrichtung (1) eine Verkehrszustands-Erkennungseinrichtung (11) aufweist, die derart ausgebildet ist, einen Verkehrszustand (60) zu erkennen, wobei die Steuerung (6) derart ausgebildet ist, eine Übergabestrategie über ein Auswahlkriterium (8) auszuüben,

wobei die Steuerung (6) das Auswahlkriterium (8) alternativ oder zusätzlich auf Grundlage des erkannten Verkehrszustandes (60) festlegt.

**Claims**

1. A method for the adjustment of an actual steering wheel angle (28) of a steering wheel (21) and of an actual wheel steering angle (29) of a wheel steering system (26) in a motor vehicle (50) after an automatically performed driving maneuver (62), comprising the following steps:

detection of the actual steering wheel angle (28) by a steering wheel angle detection device (2) and of the actual wheel steering angle (29) by a wheel steering angle detection device (3),

adjustment of the actual steering wheel angle (28) by a steering wheel control device (4) and/or of the actual wheel steering angle (29) by a wheel steering system control device (5) within a predetermined transfer time (66) on the basis of a transfer strategy (7), **characterized in that** the control (6) selects the transfer strategy (7) via a selection criterion (8), wherein a traffic condition (60) is detected by a traffic condition-detection device (11) and the selection criterion (8) is defined by the control (6) alternatively or additionally on the basis of the detected traffic condition.

2. A method according to Claim 1, **characterized in that** the transfer strategy (7) comprises the following steps:

    Calculation of a target steering wheel angle (41) as a function of the actual wheel steering angle (29) by a control (6), exertion of a torque (36) on the steering wheel (21) as a function of the target steering wheel angle (41), of the actual steering wheel angle (28) and of the predetermined transfer time (66) by the steering wheel control device (4), until the actual steering wheel angle (28) corresponds to the target steering wheel angle (41).

3. A method according to Claim 1, **characterized in that** the transfer strategy (7) comprises the following steps:

    Calculation of a target wheel steering angle (43) as a function of the actual steering wheel angle (28) by a control (6), exertion of a torque (38) on the wheel steering system (26) as a function of the target wheel steering angle (43), of the actual wheel steering angle (29) and the predetermined transfer time (66) by the wheel steering system control device (5), until the actual wheel steering angle (29) corresponds to the target wheel steering angle (43).

4. A method according to Claim 1, **characterized in that** the transfer strategy (7) comprises the following steps:

    calculation of a target steering wheel angle (41) as a function of the actual wheel steering angle (29) by a control (6), calculation of a target wheel steering angle (43) as a function of the actual steering wheel angle (28) by the control (6), exertion of a torque (36) on the steering wheel (21) as a function of the target steering wheel angle (41), of the actual steering wheel angle (28) and of the predetermined transfer time (66) by the steering wheel control device (4),

exertion of a torque (38) on the wheel steering system (26) as a function of the target wheel steering angle (43), of the actual wheel steering angle (29) and the predetermined transfer time (66) by the wheel steering system control device (5).

5. A method according to any one of the preceding claims, **characterized in that** the driver state is detected by a driver state detection device (12) and the selection criterion (8) is defined by the control (6) alternatively or additionally on the basis of the detected driver state.

6. A method according to any one of the preceding claims, **characterized in that** the selection criterion (8) is defined by the control (6) alternatively or additionally on the basis of the automatically performed driving maneuver (62).

7. A method according to any one of the preceding claims, **characterized in that** map data are provided from a navigation device (13) and the selection criterion (8) is defined by the control (6) alternatively or additionally on the basis of the provided map data.

8. A device (1) in a motor vehicle (50) for the adjustment of an actual steering wheel angle (28) of a steering wheel (21) and of an actual wheel steering angle (29) of a wheel steering system (26) after an automatically performed driving maneuver (62), comprising:

    a steering wheel angle detection device (2) for the detection of the actual steering wheel angle (28), a wheel steering angle detection device (3) for the detection of the actual wheel steering angle (29), a steering wheel control device (4) for setting the actual steering wheel angle (28), a wheel steering system control device (5) for setting an actual wheel steering angle (29), a control (6), wherein the control (6) is designed in such a manner on the basis of a transfer strategy (7) to cause an adjustment of the actual steering wheel angle (28) by the steering wheel control device (4) and/or of the actual wheel steering angle (29) by the wheel steering system control device (5), **characterized in that** the device (1) has a traffic condition detection device (11), which is designed in such a manner to detect a traffic condition (60), wherein the control (6) is designed in such a manner to exercise a transfer strategy via a selection criterion (8), wherein the control (6) defines the selection criterion (8) alternatively or additionally on the basis of the detected traffic condition (60).

## Revendications

1. Procédé destiné à l'adaptation d'un angle effectif de volant de direction (28) d'un volant de direction (21) et d'un angle effectif de braquage de roue (29) d'une direction de roue (26) dans un véhicule automobile (50) après une manoeuvre de conduite (62) automatisée effectuée, comprenant les étapes suivantes :

   détection de l'angle effectif de volant de direction (28) par un système de détection d'angle de volant de direction (2) et de l'angle effectif de braquage de roue (29) par un système de détection d'angle de braquage de roue (3),
   adaptation de l'angle effectif de volant de direction (28) par un système de réglage de volant de direction (4) et/ou de l'angle effectif de braquage de roue (29) par un système de réglage de direction de roue (5) à l'intérieur d'un temps de transmission (66) prédéfini sur la base d'une stratégie de transmission (7),
   **caractérisé en ce que**
   la commande (6) sélectionne la stratégie de transmission (7) par le biais d'un critère de sélection (8),
   un état du trafic (60) étant identifié par un système d'identification de l'état du trafic (11), et le critère de sélection (8) étant stipulé par la commande (6) en variante ou en plus sur la base de l'état du trafic identifié.

2. Procédé selon la revendication 1, **caractérisé en ce que** la stratégie de transmission (7) comprend les étapes suivantes :

   calcul, par une commande (6), d'un angle de consigne de volant de direction (41) en fonction de l'angle effectif de braquage de roue (29),
   exercice, par le système de réglage de volant de direction (4), d'un couple (36) sur le volant de direction (21) en fonction de l'angle de consigne de volant de direction (41), de l'angle effectif de volant de direction (28) et du temps de transmission (66) prédéfini,
   jusqu'à ce que l'angle effectif de volant de direction (28) corresponde à l'angle de consigne de volant de direction (41) .

3. Procédé selon la revendication 1, **caractérisé en ce que** la stratégie de transmission (7) comprend les étapes suivantes :

   calcul, par une commande (6), d'un angle de consigne de braquage de roue (43) en fonction de l'angle effectif de volant de direction (28),
   exercice, par le système de réglage de direction de roue (5), d'un couple (38) sur la direction de roue (26) en fonction de l'angle de consigne de braquage de roue (43), de l'angle effectif de braquage de roue (29) et du temps de transmission (66) prédéfini jusqu'à ce que l'angle effectif de braquage de roue (29) corresponde à l'angle de consigne de braquage de roue (43).

4. Procédé selon la revendication 1, **caractérisé en ce que** la stratégie de transmission (7) comprend les étapes suivantes :

   calcul, par une commande (6), d'un angle de consigne de volant de direction (41) en fonction de l'angle effectif de braquage de roue (29),
   calcul, par la commande (6), d'un angle de consigne de braquage de roue (43) en fonction de l'angle effectif de volant de direction (28),
   exercice, par le système de réglage de volant de direction (4), d'un couple (36) sur le volant de direction (21) en fonction de l'angle de consigne de volant de direction (41), de l'angle effectif de volant de direction (28) et du temps de transmission (66) prédéfini,
   exercice, par le système de réglage de direction de roue (5), d'un couple (38) sur la direction de roue (26) en fonction de l'angle de consigne de braquage de roue (43), de l'angle effectif de braquage de roue (29) et du temps de transmission (66) prédéfini.

5. Procédé selon l'une des revendications précédentes, **caractérisé en ce qu'**un état du conducteur est identifié par un système d'identification d'état du conducteur (12), et le critère de sélection (8) est stipulé par la commande (6) en variante ou en plus sur la base de l'état du conducteur identifié.

6. Procédé selon l'une des revendications précédentes, **caractérisé en ce que** le critère de sélection (8) est stipulé par la commande (6) en variante ou en plus sur la base de la manoeuvre de conduite (62) automatisée effectuée.

7. Procédé selon l'une des revendications précédentes, **caractérisé en ce que** des données cartographiques sont fournies un système de navigation (13), et le critère de sélection (8) est stipulé par la commande (6) en variante ou en plus sur la base des données cartographiques fournies.

8. Dispositif (1) dans un véhicule automobile (50) destiné à l'adaptation d'un angle effectif de volant de direction (28) d'un volant de direction (21) et d'un angle effectif de braquage de roue (29) d'une direction de roue (26) après une manoeuvre de conduite (62) automatisée effectuée, comprenant :

un système de détection d'angle de volant de direction (2) destiné à la détection de l'angle effectif de volant de direction (28),

un système de détection d'angle de braquage de roue (3) destiné à la détection de l'angle effectif de braquage de roue (29),

un système de réglage de volant de direction (4) destiné au réglage de l'angle effectif de volant de direction (28),

un système de réglage de direction de roue (5) destiné au réglage d'un angle effectif de braquage de roue (29),

une commande (6),

la commande (6) étant constituée de façon à, sur la base d'une stratégie de transmission (7), provoquer une adaptation de l'angle effectif de volant de direction (28) par le système de réglage de volant de direction (4) et/ou de l'angle effectif de braquage de roue (29) par le système de réglage de direction de roue (5),

**caractérisé en ce que**

le dispositif (1) comporte un système d'identification de l'état du trafic (11) qui est constitué de façon à identifier un état du trafic (60), la commande (6) étant constituée de façon à exercer une stratégie de transmission par le biais d'un critère de sélection (8),

la commande (6) stipulant le critère de sélection (8) en variante ou en plus sur la base de l'état du trafic (60) identifié.

FIG. 1

FIG. 2a
Stand der Technik

FIG. 2b
Stand der Technik

FIG. 3a

FIG. 3b

FIG. 4a

FIG. 4b

FIG. 4c

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2862767 A2
- DE 102012004502 A1

- DE 102007002266 A1